# EUROPEAN PATENT SPECIFICATION

(11) **EP 0 719 495 B1**
(45) Date of publication and mention of the grant of the patent: **24.07.2002**
(21) Application number: 94203771.4
(22) Date of filing: 27.12.1994
(51) Int. Cl.: A01D 1/00, A01D 33/14, A01D 21/00

(54) **Harvesting device**
Erntemaschine
Récolteuse

(43) Date of publication of application: 03.07.1996
(73) Proprietor: AMAC B.V., NL-4453 CN 's-Heerenhoek (NL)
(72) Inventor: Tiemersma, Petrus Ernst, NL-4331 JB Middelburg (NL)
(74) Representative: Bartelds, Erik

(56) References cited:
- EP-A- 0 363 916
- DE-A- 2 737 815
- DE-B- 1 090 459
- DE-U- 9 320 576
- FR-A- 2 208 592
- GB-A- 2 240 454
- GB-A- 2 248 539

## Description

The invention relates to a harvesting device comprising:
- a first frame movable over a ground,
- a second frame connected to the first frame for pivoting on an axis extending substantially in the direction of movement and bearing at least one conveyor movable between two reversing rollers and a number of lifting shares protruding into the ground, the second frame including means for holding substantially horizontal the rear reversing roller as seen in the direction of movement and means for causing the front reversing roller to follow the contour of the ground, and
- means displaceable over the ground for controlling the working depth of the lifting shares in the ground.

Such a harvesting device is known, e.g. from GB-A-2 240 454 or EP-A-0 023 369.

This prior art harvesting device, which is also designated a slope harvester, is particularly suitable for harvesting crops which grow on sloping farmland. The harvester comprises a first frame or rear axle assembly carrying a set of ground wheels. A second frame having a draw bar at its front end for connection to a tractor is pivotally supported by the first frame. This second frame carries one or more separation conveyors and a plurality of lifting shares arranged at the front end. The rear and front ends of the second frame are pivotal with respect to each other, in order to allow the shares to follow the contour of the soil. Also arranged at the front of the second frame is a pair of diabolo rollers for adjusting the working depth of the shares.

This prior art harvesting device can be moved forward over the farmland substantially along the contour of the slope, wherein as a result of the pivoting connection between the first and second frame the conveyor, which serves as sieve for separating earth carried along with the harvested crop, is held substantially horizontally, whereby the harvested crop is distributed uniformly over the sieve conveyor and does not collect on a low-lying side thereof.

This known harvester has the drawback that due to the fixed connection between the shares and the diabolo rollers, an unevenness or soft location in one of the rows may result in so-called "bulldozing". This is a phenomenon whereby one of the diabolo rollers sinks into the soil, taking with it the other diabolo roller, which leads to the pushing of soil before the harvesting device, whereby the device could eventually become stuck.

Another type of harvesting device is known for instance from GB-A-2 248 539. This known harvester comprises a main frame having ground wheels at its rear end and a draw bar at its forward end for connection to a tractor. The harvester includes two row units, each having a soil lifting share at the forward end of a separation conveyor. The two row units are mounted on a common sub-frame, which is movable in vertical and transversal directions with respect to the main frame. The movement of the sub-frame is driven by hydraulic actuators, which receive height and tilt signals from sensors associated with another sub-frame. This second sub-frame, which carries a pair of diabolo rollers, is itself movable in vertical and transversal directions with respect to the sub-frame carrying the row units. In this way, the row units move in parallel with the diabolo rollers, and thus follow the contour of the soil as if they were mechanically fixed to the diabolo rollers, but without applying any load on the diabolo rollers, so as to prevent any damage to the crop in the soil.

However, this known harvester has the drawback that the diabolo rollers serve both to maintain the working depth of the shares and to follow the contour of the soil. To this end the shares are slaved to the diabolo rollers by the sensor controlled actuators, which has for its result that any downward movement of one of the diabolo rollers, e.g. when encountering a depression or soft spot in the row, leads to the corresponding share digging into the row.

The invention has for its object to provide a harvesting device of the above described type which is particularly suitable for use on a soft ground. According to the invention this is achieved in that the depth control means are carried by a third frame connected adjustably to the second frame and are freely pivotable relative to the rest of the harvesting device around an axis extending substantially in the direction of movement. Because the means for controlling the working depth are freely pivotable relative to the rest of the harvesting device they can under all conditions follow the path of for instance rows of crops on the farmland and differences in the soil consistency of the crop rows can be compensated. The term "pivotable" as used herein is intended to cover any movement which results in parts of the depth control means arranged on opposite sides of a longitudinal plane of symmetry performing opposite movements in vertical direction.

Preferred embodiments of the harvesting device according to the invention form the subject-matter of the dependent claims.

The invention is now elucidated on the basis of two embodiments, wherein reference is made to the annexed drawings in which corresponding components are designated with corresponding reference numerals, and wherein:
Fig. 1 shows a partly broken away perspective view of a harvesting device according to a first embodiment of the invention,
Fig. 2 is a partly broken away perspective detail view along the arrow II in fig. 1, and
Fig. 3 is a view corresponding with fig. 1 of a second embodiment of the device according to the invention.

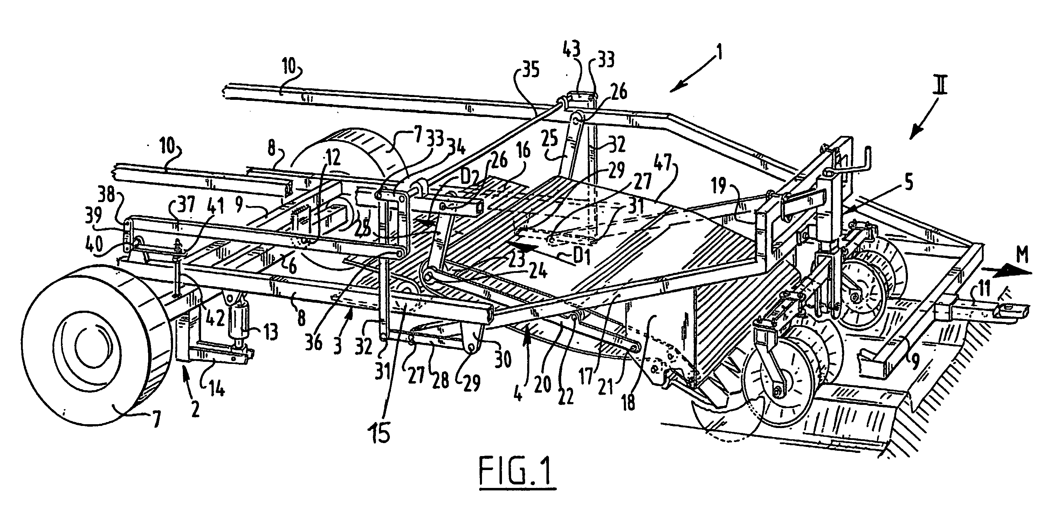

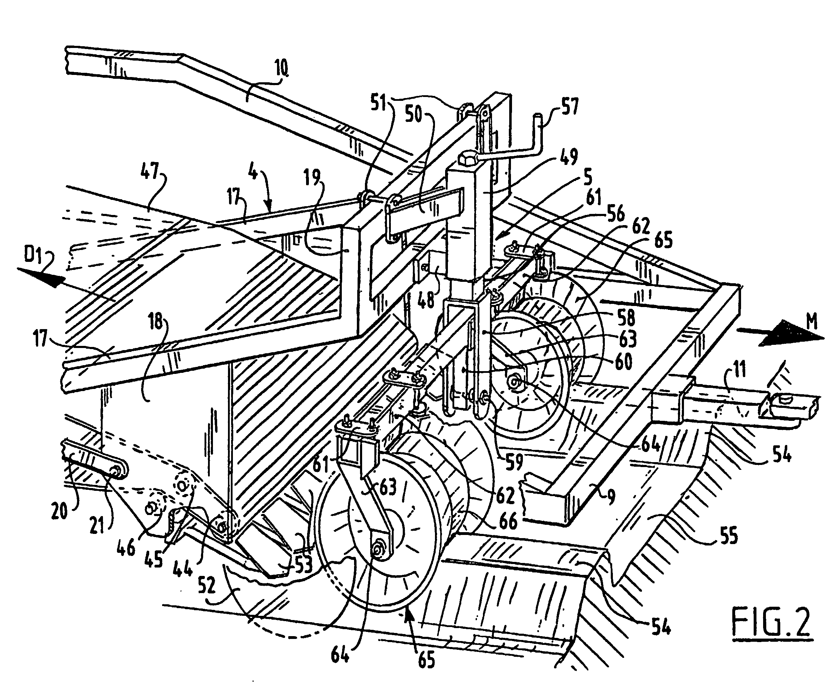

A harvesting device 1 (fig. 1) comprises a first frame 2 movable over a ground 55, and a second frame 3,4 which is pivotally connected to the first frame 2 and in which are accommodated two sieve conveyors 16,47. The second frame 3,4 is pivotable relative to the first frame 2 round an imaginary axis which is practically parallel to the direction of movement M of the device 1. The second frame has a divided form in the embodiment shown and comprises a rear frame part 3 as seen in the direction of movement M which is pivotally connected to the first frame 2, and a forward frame part 4 which is suspended for free movement in the rear frame part 3. The forward frame part 4 bears in addition to conveyor 47 a number of lifting shares 53 (fig. 2) which protrude into the ground 55, in particular into parallel rows 54 present on the ground 55 in which the crop for harvesting is growing. On the forward side the device 1 is provided with a third frame 5 which is connected for adjustment in height direction to the forward part 4 of the second frame and which is provided with two wheels 65 which are freely movable relative to both parts 3,4 of the second frame and relative to the first frame 2. Wheels 65 have a tread 66 with a central waist portion or a so-called diabolo shape, which ensures that the wheels 65 track well on the crop rows 54. The wheels 65 movable over the crop rows 54 maintain the working depth of the lifting shares 53 in the ground 55 at a determined, preset value.

The first frame 2 comprises a shaft support 6 which runs transversely of the direction of movement M and on which two wheels 7 are rotatably mounted. The shaft support 6 is provided on one side with a bracket 14.

The rear part 3 of the second frame has a framework which is formed by two parallel lower longitudinal beams 8, two cross beams 9 joining the longitudinal beams 8, and two overlying, bent longitudinal beams 10 which are joined on the front side of frame part 3 to the lower longitudinal beams 8 and the forward cross beam 9. The forward cross beam 9 further carries a pole 11. The rear frame part 3 is pivotally connected by means of a hinge connection 12 to the shaft support 6 of first frame 2. The inclination of frame part 3 relative to first frame 2 can be varied by means of a jack 13, in the case shown a hydraulic jack, which can be connected to a central hydraulic system of harvesting device 1 or which can be operated by means of a hand pump. Suitable adjustment of the inclination of the rear frame part 3 can ensure that the rear conveyor 16, which is mounted in rear frame part 3 by means of a front reversing roller 15 and a rear reversing roller (not shown here), remains substantially horizontal, even when the harvesting device is moved over a slope along a contour.

The forward part 4 of the second frame comprises a substantially U-shaped beam 17 which is provided on both sides with bearing plates 18 in which are mounted a lower reversing roller 44 and two guide rollers 45,46 of the forward conveyor 47. An arm 20 is also pivotally mounted in each of the bearing plates 18 by means of a hinge 21, which arm 20 is hingedly connected on its other extremity at 24 to a substantially vertical suspension arm 25. In addition, the upper reversing roller 23 of conveyor 47 is rotatably mounted in this extremity of the arm 20. Both suspension arms 25 are in turn pivotally connected by means of hinges 26 to the upper longitudinal beams 10 of the rear frame part 3. The arms 20 also serve for mounting of a guide roller 22 roughly midway along conveyor belt 47.

The free ends of the U-beam 17 are each connected to a longitudinal arm 28 practically halfway along by means of a hinge 27. One outer end of each of these longitudinal arms 28 is connected by means of a hinge 29 to a fixed lip 30 which protrudes below the lower longitudinal beam 8 of rear frame part 3, and the other outer end is connected to a vertical arm 33 by means of a hinge 31. The fixed lip 30 with hinge 29 is herein located on one side of the frame in front of the hinge point 31 and on the other side of the frame behind it. Both vertical arms 32 are each connected via a hinge 33 to a lever 34, 43 respectively which are pivotable on a shaft 35 extending in transverse direction over the rear frame part 3. The one lever 43 herein faces in forward direction relative to pivot shaft 35 and the other lever 34 in rearward direction relative to this shaft 35. Lever 34 is embodied as a knee-piece and also has a hanging part which is connected by means of a hinge 36 to an arm 37 extending to the rear. This arm 37 is in turn connected via a hinge 38 to an L-shaped lever 39 which is pivotable on a shaft 40 and the other end 41 of which is fixed to an upright 42 welded onto the shaft support 6 of the first frame 2. The pivot shaft 40 is herein fixed to the rear part 3 of the second frame.

The U-beam 17 is fixedly connected on its forward side to the third frame 5 by means of a T-piece 48 bolted to U-beam 17 and two brackets 50 and hitches 51 which are clamped round a portal 19 of U-beam 17. The third frame 5 comprises a sleeve 49 which is fixed to bracket 50 and in which an upright 56 is telescopically slidable. The movement of upright 56 in sleeve 49 is controlled by a screw spindle, only the handle 57 of which is shown here. The upright 56 ends on its underside in a fork 58 in which a bearing 59 is arranged for pivotally mounting a T-shaped carrier 60. Two substantially reverse U-shaped suspension members 62 are fixed to the outer ends of the horizontal part of the T-shaped carrier 60 by means of hitches 61. The reverse U-shaped suspension members 62 have two downward directed legs 63 between which in each case a wheel 65 is mounted for rotation on a bearing 64.

The operation of the slope harvester 1 is as follows. When harvesting device 1 is displaced over sloping farmland in the direction of the contours of the slope, by operating the hydraulic jack 13 the rear part 3 of the second frame is placed slightly obliquely relative to the shaft support 6 of first frame 2 which will follow the slope of the farmland, whereby the slope is compensated and the rear frame part 3 and the conveyor belt 16 mounted therein are held substantially horizontal. By extending the hydraulic jack 13 the lever 39, whereof the one end 41 is connected to the first frame 2 and the hinge point 40 is connected to frame part 3, is rotated on pivot shaft 40, whereby the longitudinal arm 37 is moved forward in the travel direction. This displacement of arm 37 is converted by the knee-shaped lever 34 by a rotation of pivot shaft 35 in counterclockwise direction. The lever 34 and its associated vertical arm are hereby moved upward, while the outer end 33 of lever 34 and the associated vertical arm 32 are displaced downward. The pivot point 27 of U-beam 17 situated in the foreground in the drawing will therefore be displaced downward, while the pivot point situated in the background will be placed upward. The U-beam 17 is therefore swivelled round an imaginary axis which is substantially parallel to the direction of movement M of slope harvester 1. This swivel movement results in the front reversing roller 44 of conveyor 47, which is mounted between cheeks 18 fixed to U-beam 17, also being swivelled, and therefore following the slope of the farmland, just as the lifting shares 53 which are fixed to a beam running between the cheeks 18 and parallel to reversing roller 44. The upper reversing roller 23 of conveyor 47, which is suspended from frame part 3 by means of arms 25, will remain substantially horizontal. However, because the bearings 24 of this reversing roller 23 are connected by means of rods 20 to the cheeks 18, the reversing roller 23 will turn slightly in a horizontal plane, wherein the suspension arm 25 in the foreground of the drawing will swivel slightly forward as seen in the direction of movement M and the opposite suspension arm 25 will swivel in a direction opposed to the direction of movement M. This displacement will also be accompanied by a small displacement in a direction transversely of the direction of movement M, for which purpose the suspension arms 25 are connected at 26 to frame part 3 by means of spherical hinges.

Because the front reversing roller 44 and the lifting shares 53 follow the slope of the farmland, a good operation of the harvesting device 1 is ensured under all conditions. Because in addition the upper outer end of the first conveyor 47 and the whole of the second conveyor 16 are held horizontal, a good distribution of the harvested products on conveyor belts 47,16 is ensured and collecting of all harvested products on one side of the belts is prevented. This is of particular importance, since the conveyor belts 47,16 will generally be embodied as sieve conveyors which will thus allow through the earth carried along with the harvested crops. The harvested products are thus freed of earth adhered thereto by being transported over belts 47,16, which could take place considerably less effectively if the conveyor belts 47,16 were to follow the direction of slope of the farmland.

The working depth of lifting shares 53 is controlled by the height-adjustable third frame 5 and the wheels 65 connected thereto. By means of the screw spindle 57 a determined working depth is adjusted which is thereafter maintained because the wheels 65 travel over the rows 54. Because the wheels 65 are freely movable in relation to the rest of the device 1, uneven areas or soft locations in the rows 54 have hardly any effect on the travel of the wheels 65. Thus is prevented that, if one of the wheels 65 were to travel through a hole, the other wheel 65 would penetrate deeper into the ground 55 under the influence of the weight of harvesting device 1, as would be the case if wheels 65 were rigidly connected to frame parts 3,4. If this were to occur, the wheel 65 penetrating into the ground 55 and pushing soil before it (so-called "bulldozing") would then slip thereon and finally become stuck therein. With the now chosen construction, however, when a wheel 65 encounters a hole and thus sinks slightly, the T-shaped carrier 60 will pivot on bearing 59, whereby the other wheel 65 is moved slightly upward relative to hinge point 59. The pressure of the harvesting device 1 is hereby also distributed uniformly over both wheels 65 and thus over the ground 55. Because the bearing 59 is substantially located on a line connecting the wheel bearings 64, the rocking movement of the T-piece 60 round bearing 59 has practically no influence on the adjusted height of frame 5 above the ground 55 and thereby the working depth of lifting shares 53.

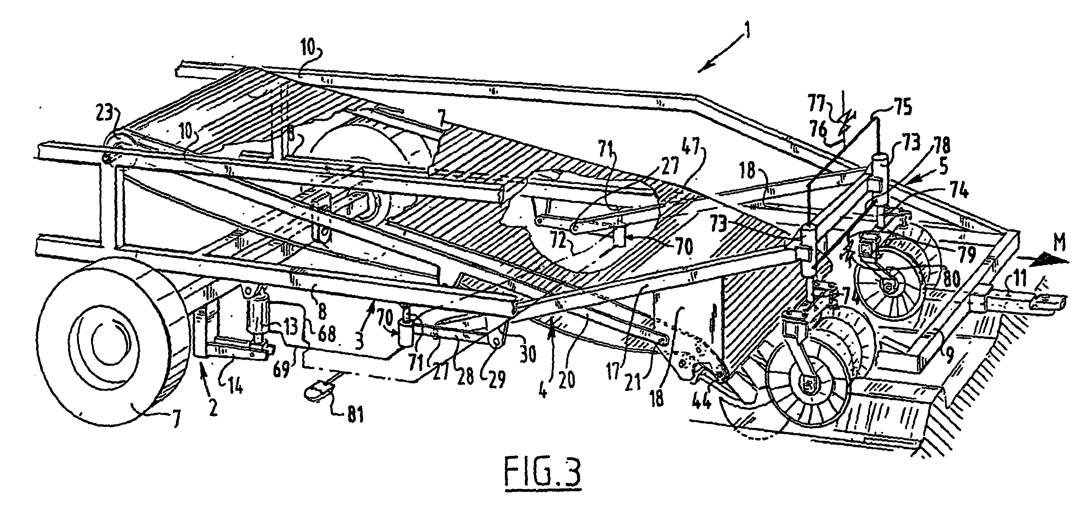

In an alternative embodiment of the slope harvester 1 according to the invention (fig. 3) the second frame 3 has an undivided form and has only a single sieve conveyor 47. The length of conveyor 47 is chosen in this case such that displacements of the lower reversing roller 44 do not result in unacceptably great stresses and deformations in conveyor belt 47, despite the fact that the upper reversing roller 23 is rigidly mounted in frame 3. In the embodiment shown here the inclination of the lower reversing roller 44 relative to the frame 3 is controlled by means of a hydraulic reversing mechanism which is connected controllably to the jack 13 which serves to hold the second frame 3 and the greater part of conveyor belt 47 horizontal. The hydraulic reversing mechanism corresponds with the mechanical reversing mechanism 32-42 of the first embodiment and converts the displacement of the jack 13, which forms a measure of the displacement of the second frame 3 relative to the first frame 2, into an oppositely directed displacement of the U-beam 17 relative to the second frame 3.

The reversing mechanism has hydraulic jacks 70 which are arranged on both sides of the U-beam and connected to the above described longitudinal arms 28 and which each have a piston rod 71 which is connected to a lower longitudinal beam 8 of the second frame 3. Hydraulic jacks 70 are each connected to the horizontal adjustment jack 13 and to each other. For this purpose the space of the jack 13 above its piston rod is connected across a hydraulic conduit 68 to the space under the piston rod 71 of the left-hand hydraulic jack 70, the space under the piston rod of hydraulic jack 13 is connected to the space under the piston rod of the right-hand hydraulic jack 70 across a hydraulic conduit 69 and the spaces above the hydraulic jacks above the piston rods 71 of the left and right-hand hydraulic jack 70 are mutually connected by a hydraulic conduit 72.

When now the harvesting device 1 is used on sloping terrain and the jack 13 is extended in order to hold the rear reversing roller 23 of conveyor 47 horizontal, hydraulic fluid is pressed from the underside of jack 13 through conduit 69 to the underside of the right-hand hydraulic jack 70. The right-hand piston rod 71 is hereby moved upward and hydraulic fluid is pressed through conduit 72 to the top of the left-hand hydraulic jack 70. The piston rod 71 of the left-hand jack 70 is therefore displaced downward and thus presses hydraulic fluid through conduit 68 to the top of jack 13. An accumulator 81 is herein further incorporated in conduit 68 in order to keep constant the pressure in the hydraulic circuit 68,69,72. Due to the above described displacements of the piston rods 71 on the left and right-hand side of device 1 the U-beam 17 is rotated on the longitudinal axis of device 1 in a direction opposed to the rotation direction of the second frame 3 relative to the first frame 2. This ensures that the rear reversing roller 23 of conveyor 47 as seen in the direction of movement M is held horizontal, while the front reversing roller 44 and the lifting shares 53 follow the slope of the farmland.

Since in this embodiment the greater part of the displacements and movements are controlled hydraulically, the wheels 65 are also hydraulically movable. To this end the reverse U-shaped member 62 which carries each wheel is connected to a piston rod 74 of a hydraulic jack 73. The jacks 73 are mutually connected by two hydraulic conduits 75, 78 respectively which each have a branch line 76, 79 respectively which leads via a controllable valve 77, 80 respectively to the central hydraulic system of the slope harvester 1. The working depth of the lifting shares 53 is now set by opening valves 77,80 and transporting hydraulic fluid through the conduit 76 or 79 to the part of the hydraulic jacks 73 located above or below the pistons, whereby hydraulic fluid is pressed out of jacks 73 on the other side of the pistons until the piston rods 74 are retracted or extended over a desired distance, whereafter the valves 77,80 are closed. Both hydraulic jacks 73 form a closed system with their connecting conduits 75,78.

When therefore one of the wheels 65 sinks, for instance because it travels through a hole, and the associated piston rod 74 is displaced downward, hydraulic oil is now pressed from the associated cylinder 73 through the lower connecting conduit 78 to the other cylinder 73 and oil is simultaneously drawn in from the other cylinder 73 through the upper connecting conduit 75. The piston rod 74 in the other cylinder 73 is thereby displaced upward, carrying with it the wheel 65 suspended therefrom. Thus is again ensured that the movement in vertical direction of both wheels 65 is wholly isolated from the pivoting of the frame 3 and the conveyor 47 accommodated therein, and that the pressure on frame part 5 is distributed evenly over both wheels 65.

Because in accordance with both harvesting devices according to the invention the position of the front reversing roller 44 of conveyor 47 and the lifting shares 53 is thus wholly independent of the position of wheels 65 and due to the hinged suspension of these wheels 65, the height adjustment of the frame and therewith the depth adjustment of the lifting shares 53 can be held constant, also in the case of uneven ground and varying consistencies of the soil, harvesting can take place on slopes under all conditions and soil consistencies with a uniform working depth and a good operation of the sieve conveyors, without the danger of the slope harvester "bulldozing", getting stuck and the like.

The horizontal adjustment of the rear reversing roller 23 of conveyor 47 as seen in the direction of movement can take place manually as well as automatically. In automatic horizontal adjustment use could for instance be made of a mercury switch which is closed when there is a deviation from the horizontal position. A delay mechanism would then have to be applied herein in order to prevent the different frame parts being continuously displaced relative to each other, whereby the associated displacing mechanisms would be very heavily loaded.

The control of the front reversing roller 44 by the means for horizontal adjustment of the rear reversing roller could likewise be embodied in a manner other than described above. The direct mechanical or hydraulic coupling could thus be replaced by an electronic coupling, wherein an input signal indicating the turning of the second frame relative to the first frame is provided by for example a travel sensor or an approach switch and on the basis of this signal the front reversing roller is turned relative to the rear reversing roller by electromechanical, hydraulic or pneumatic means.

## Claims

1. Harvesting device (1) comprising:
- a first frame (2) movable over a ground (55),
- a second frame (3, 4) connected to the first frame (2) for pivoting on an axis extending substantially in the direction of movement (M) and bearing at least one conveyor (16, 47) movable between two reversing rollers (23, 44) and a number of lifting shares (53) protruding into the ground (55), the second frame including means for holding substantially horizontal the rear reversing roller (23) as seen in the direction of movement (M) and means for causing the front reversing roller (44) to follow the contour of the ground (55), and
- means (65) displaceable over the ground (55) for controlling the working depth of the lifting shares (53) in the ground (55),
**characterized in that** the depth control means (65) are carried by a third frame (5) connected adjustably to the second frame (3, 4) and are freely pivotable relative to the rest of the harvesting device (1) around an axis extending substantially in the direction of movement (M).

2. Harvesting device as claimed in claim 1, **characterized in that** the depth control means (65) comprise at least two wheels (65) mounted on a carrier (60) pivotable on a shaft (59) extending in the direction of movement (M).

3. Harvesting device as claimed in claim 1, **characterized in that** the depth control means (65) comprise at least two wheels (65) each connected by a hydraulic jack (73, 74) to the third frame (5), wherein the hydraulic jacks (73, 74) form part of a closed hydraulic circuit.

4. Harvesting device as claimed in any of the foregoing claims, **characterized in that** the second frame (3, 4) takes a divided form, the rear frame part (3) as seen in the direction of movement (M) is pivotally connected to the first frame (2) and the forward frame part (4) is suspended for free movement in the rear frame part (3).

## Patentansprüche

1. Erntemaschine (1) mit den folgenden Merkmalen:
- ein erster Rahmen (2) ist über einem Gelände (55) bewegbar,
- ein zweiter Rahmen (3, 4) ist mit dem ersten Rahmen (2) um eine im wesentlichen in Richtung der Bewegung (M) verlaufende Achse schwenkbar angelenkt und trägt wenigstens eine Fördervorrichtung (16, 47), die zwischen zwei Umlenkrollen (23, 24) läuft, wobei mehrere Hubscharen (53) in den Boden (55) vorstehen und der zweite Rahmen Mittel aufweist, um die hintere Umlenkrolle (23) in Bewegungsrichtung (M) betrachtet im wesentlichen horizontal zu halten, und wobei Mittel vorgesehen sind, die die vordere Umlenkrolle (44) veranlassen, der Kontur des Geländes (55) zu folgen, und
- eine Einrichtung (65), die über dem Gelände (55) versetzbar ist, um die Arbeitstiefe der Hubscharen (53) im Gelände (55) einzustellen,
**dadurch gekennzeichnet, daß** die Tiefensteuereinrichtung (65) von einem dritten Rahmen (5) getragen wird, der einstellbar mit dem zweiten Rahmen (3, 4) verbunden und frei relativ zu der übrigen Erntemaschine (1) um eine Achse verschwenkbar ist, die sich im wesentlichen in Bewegungsrichtung (M) erstreckt.

2. Erntemaschine nach Anspruch 1,
**dadurch gekennzeichnet, daß** die Tiefensteuereinrichtung (65) wenigstens zwei Räder (65) aufweist, die auf einem Träger (60) montiert sind, der um eine Welle (59) schwenkbar ist, die sich in Bewegungsrichtung (M) erstreckt.

3. Emtemaschine nach Anspruch 1,
**dadurch gekennzeichnet, daß** die Tiefensteuereinrichtung (65) wenigstens zwei Räder (65) aufweist, die jeweils über einen hydraulischen Kolbenantrieb (73, 74) mit dem dritten Rahmen (5) verbunden sind, wobei die hydraulischen Kolbenantriebe (73, 74) einen Teil eines geschlossenen hydraulischen Kreises bilden.

4. Erntemaschine nach einem der vorhergehenden Ansprüche,
**dadurch gekennzeichnet, daß** der zweite Rahmen (3, 4) eine geteilte Form aufweist und der hintere Rahmenteil (3), in Bewegungsrichtung (M) betrachtet, schwenkbar mit dem ersten Rahmen (2) verbunden ist und wobei der vordere Rahmenteil (4) frei beweglich in dem hinteren Rahmenteil (3) aufgehängt ist.

## Revendications

1. Récolteuse (1) comprenant :
un premier bâti (2) mobile au dessus d'un sol (55),
un deuxième bâti (3, 4) relié au premier bâti (2) et pivotant autour d'un axe s'étendant sensiblement dans la direction du déplacement (M) et supportant au moins un transporteur (16, 47) se déplaçant entre deux rouleaux inverseurs (23, 44) et un certain nombre de socs de charrue à relevage (53) pénétrant dans le sol (55), le deuxième bâti comprenant des moyens permettant de maintenir sensiblement horizontal le rouleau inverseur arrière (23) vu dans la direction du déplacement (M) et des moyens destinés à faire que le rouleau inverseur avant (44) suive le contour du sol (55), et
des moyens (65) se déplaçant au dessus du sol (55) permettant de commander la profondeur de travail dans le sol (55) des socs de charrue à relevage (53),
**caractérisée en ce que** les moyens (65) de commande de la profondeur de travail sont supportés par un troisième bâti (5) relié de manière ajustable au deuxième bâti (3, 4) et peuvent pivoter librement par rapport au reste de la récolteuse (1) autour d'un axe s'étendant sensiblement dans la direction du déplacement (M)

2. Récolteuse selon la revendication 1, **caractérisée en ce que** les moyens (65) de commande de la profondeur de travail comprennent au moins deux roues (65) montées sur un support (60) qui peut pivoter autour d'un arbre (59) qui s'étend dans la direction du déplacement (M).

3. Récolteuse selon la revendication 1, **caractérisée en ce que** les moyens (65) de commande de la profondeur de travail comprennent au moins deux roues (65), chacune d'elles étant reliée par un vérin hydraulique (73, 74) au troisième bâti (5), les vérins hydrauliques (73, 74) faisant partie d'un circuit hydraulique fermé.

4. Récolteuse selon l'une quelconque des revendications précédentes, **caractérisée en ce que** le deuxième bâti (3, 4) se présente sous forme de plusieurs parties, la partie arrière (3) de bâti vue dans la direction du déplacement (M) étant reliée de manière pivotante au premier bâti (2), et la partie avant (4) de bâti étant suspendue à la partie arrière (3) de bâti pour avoir un mouvement libre.
